# EUROPEAN PATENT APPLICATION

(11) **EP 2 413 109 A1**
(43) Date of publication of application: **01.02.2012**
(21) Application number: 11380062.7
(22) Date of filing: 28.07.2011
(51) Int. Cl.: G01F 13/00, A61C 13/12, B01F 3/12, B01F 15/04, B01F 15/00

(54) **Dosing machine and dosing procedure for liquid substances and powdery substances**

(30) Priority: 29.07.2010 ES 201000992
(71) Applicant: Talleres Mestraitua S.L., 48150 Sondika (Bizkaia) (ES)
(72) Inventor: Mestraitur Ruano, Ignacio, 48150 Sondika (Bizkaia) (ES); Alonso Garcia, 48150 Sondika (Bizkaia) (ES)
(74) Representative: Urteaga Simarro, José Antonio

(57) **Abstract**

Dosing machine (1) to allow dosing of liquid substances and powdery substances contained in two containers (2, 3) with loading areas (2a, 3a), which comprises a housing (4) in which there is an cavity open to the outside and into which the containers (2,3) are partially inserted in a removable manner, with the containers (2, 3) partially protruding outward from the housing (4), and with the loading areas (2a, 3a) of the containers (2, 3) remaining outside the housing. The invention provides a dosing machine (1) that is easy to repair and clean and on which internal problems are more simply diagnosed. Moreover, it is possible to change materials. The invention also relates to various procedures for dosing substances carried out by the dosing machine (1).

## Description

### Technical field

The invention relates to a dosing machine for liquid substances and powdery substances, to allow the preparation of mixtures of products intended for use in the field of dental medicine, aesthetic treatments, etc. Additionally, the invention relates to the operation of this machine, i.e. a procedure for dosing liquid substances and powdery substances.

### Prior art

The use of powdery substances is known in the field of dental medicine. For example, substances such as plaster, alginate or coating, are used to prepare mixtures involved in the repair of teeth and in other applications. These powdery substances must usually be mixed with liquid substances to obtain a semi-solid final mixture which might then be intended to solidify, depending on the specific dental medical application. The liquid substances may be water, a coating solvent, etc.

The dosing and mixing of powdery substances with liquid substances for medical use has generally and traditionally been done by hand. This means, as regards dosing, that a professional has to take manually pour a predetermined amount of powdery substances and the corresponding amount of liquid substances into a container. The ratio between the amount of powdery substances and liquid substances depends on several factors such as the nature of the powdery substances themselves and the application for which the mixture is intended.

Dosing machines have recently begun to be disclosed that perform the dosing or delivery of powdery substances and of liquid substances into a receptacle, and therefore make it possible to greatly facilitate the dosing for the professional responsible for carrying out this task. These machines, such as the one described in WO2010009483A1, may be operated through a user interface and are characterised by having separate internal housings for storing liquid substances and powdery substances, which may be reloaded from the outside of the machine. When a user places a receptacle under the machine, more specifically under an exit area of the machine, and proceeds to operate the machine, the machine drops a certain amount of liquid substances and powdery substances (the amount having been previously programmed by the user) into the receptacle, through the exit area. These machines are very useful for professionals but have a major drawback: their repairing or cleaning is complex because all their components are integrated inside the machine and therefore these tasks require the machine to be disassembled to a great extent. Moreover, these machines have the disadvantage that it is not possible to change materials: once they have been loaded with one specific powdery substance, it is not possible to load them with another because the original substance has invaded and permeated many of the machine's different internal mechanisms (e.g. a spindle and cogwheel unit that stirs the powdery substances to facilitate delivery).

The objective of the invention is to provide a dosing machine design that facilitates the cleaning and repairing of the machine by professionals who carry out such tasks and even by the user of the machine, allowing the user to perform at least simple repairs to the machine. Additionally, the objective of the invention is to propose some ways of operating the machine which also facilitate its operation, i.e. that simplify the process of dosing the substances.

Another objective of the invention is to provide a machine that allows changing materials, i.e. replacing one powdery substance by another quickly and easily, and without requiring the internal cleaning of the machine.

### Brief description of the invention

It is an object of this invention to provide a dosing machine to enable dosing of liquid substances and powdery substances into a receptacle. These liquid substances and powdery substances are initially contained respectively in a first container and a second container, which are equipped with respective entrance areas for the loading of substances. The dosing machine according to the invention comprises a housing, in which there is a cavity open to the outside and into which the containers are partially inserted. Once the containers are in place (they are connected to the interior of the dosing machine in a removable manner), the dosing machine is characterised by the fact that they partially protrude outward from the housing. Consequently, the containers are accessible from the outside of the machine so that a user can remove them (for replacement, repair, cleaning, etc. or to change materials) by simply disconnecting and pulling them. In addition, the loading areas of the containers remain outside the housing, and are accessible from outside the machine without needing to dismantle the machine.

The main advantages of the dosing machine of the invention are that it allows easy insertion or removal of the liquid substance and powdery substance containers, without needing to dismantle the machine or access complex compartments inside it. Consequently, repairing and cleaning the machine, changing materials and diagnosing problems inside the machine are also simple tasks to perform, thanks to the invention. It is also easy for the professional person responsible for replacing their contents to refill the containers, which are directly accessible from the outside.

In addition, several dosing procedures for liquid substances and powdery substances, based on storing data for a default dose consisting of a certain amount of liquid substances and another certain amount of powdery substances, and on delivering the liquid substances and solid substances to the receptacle in an amount proportional to the default dose. As will be seen in the detailed description of the invention, this allows quick, convenient and simple operation of the dosing machine.

### Brief description of the drawings

Details of the invention can be seen in the accompanying drawings, which do not seek to restrict the scope of the invention:
- Figure 1 shows a perspective view of an embodiment of the dispensing machine according to the invention.
- Figure 2 shows a similar perspective view to the above, in which the lid and the first container have been removed, and the second container is shown only schematically.
- Figure 3 shows another perspective view of the previous dosing machine, without containers, allowing the internal components of the dosing machine to be viewed.

### Detailed description of the invention

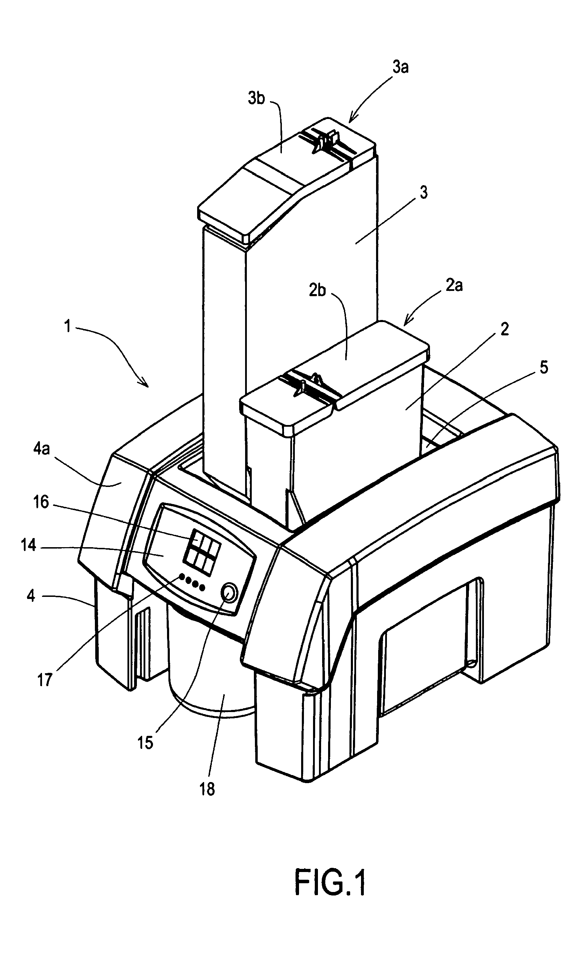

Figure 1 shows a perspective view of an embodiment of the dosing machine (1) according to the invention, which allows the dosing of liquid substances and powdery substances and their delivery to a receptacle (18). The dosing machine (1) comprises a first container (2) to hold liquid substances and a second container (3) to hold powdery substances. Both containers are provided with respective loading areas (2a, 3a) through which the containers can be filled, i.e. the respective substances can be loaded. In the embodiment shown, the containers (2, 3) comprise their respective lids (2b, 3b) which, when opened, allow access to their interiors.

The dosing machine (1) according to the invention comprises a housing (4), in which there is a cavity (5) open to the outside and into which the containers (2, 3) are partially inserted, connecting them to the interior of the dosing machine (1) in a removable manner. The containers (2, 3) partially protrude outward from the housing (4), with the loading areas (2a, 3a) of the containers (2, 3) themselves, and part of the body of the containers (2, 3), remaining outside the housing, as shown in the figure. Consequently, loading the containers with the respective substances is an easy and comfortable task. It also facilitates cleaning, repair or replacement of the containers as the user only has to grasp them and pull them in order to remove them from the dosing machine (1), without needing to dismantle any parts to do so.

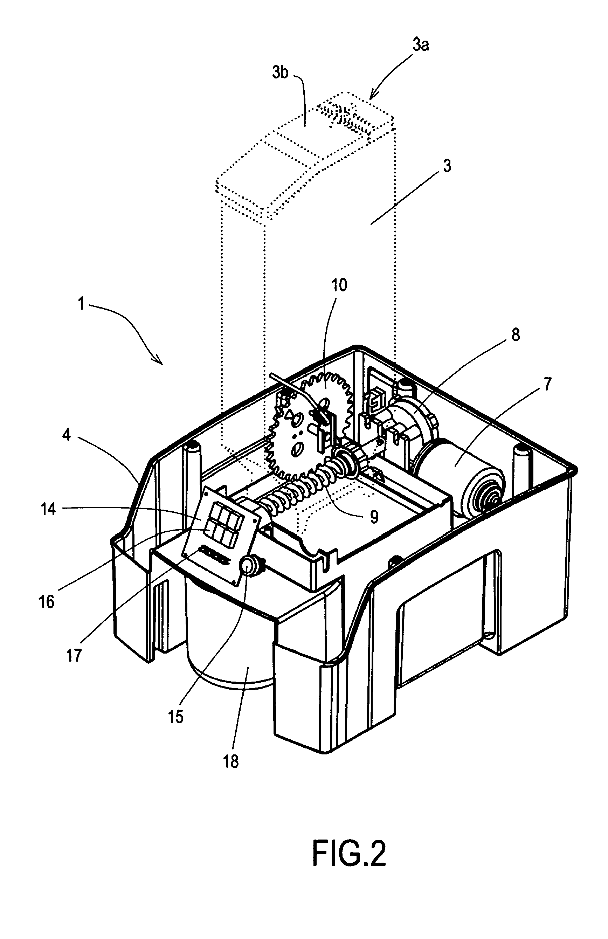

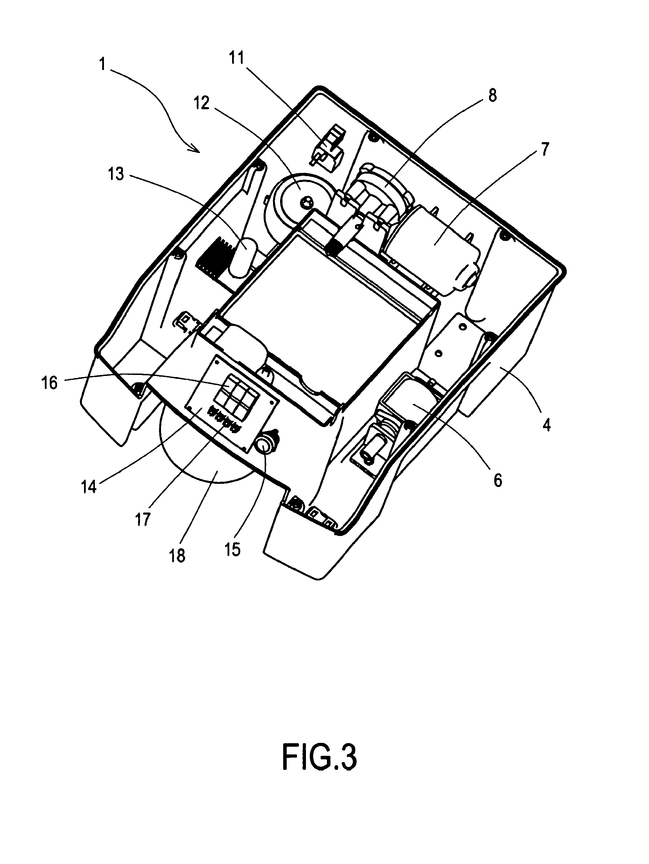

In the embodiment shown, the housing (4) of the dosing machine (1) comprises a removable lid (4a), which allows the interior of the machine to be accessible or remain hidden. Preferably, the lid (4a) can be attached to the dosing machine (1) by screws or other similar means of fixing. Figure 2 shows a perspective view of the dosing machine (1), in which the lid (4a) and the first container (2) have been removed, and showing the second container (3), i.e. the container to house the powdery substances, in schematical lines. Figure 3 shows another perspective view of the dosing machine (1), although in this case neither container is shown. As shown in both Figures 2 and 3, the dosing machine (1) comprises several elements to enable it to operate. As basic elements, the machine comprises a pump (6) to act on the liquid substances in the first container (2) and allow them to be expelled with a certain pressure towards the receptacle (18) (the amount of the liquid substance expelled can therefore be accurately controlled); a motor (7) and a transmission system (8), to allow the operation of a spindle (9) and cogwheel (10) unit located inside the first container (2), which stir the powdery substances housed in the first container (2) in order to facilitate their exit from it. The dosing machine (1) has the peculiarity that at least the pump (6), the motor (7) and the transmission system (8) are located inside the housing (4) and are accessible from the outside when the lid (4a) is removed. In addition, the dosing machine (1) comprises a connector (11), a transformer (12) and a rectifier (13), to provide electrical power, these components being also preferably accessible from the outside when the lid (4a) is removed.

Additionally, the dosing machine (1) preferably includes a user interface (14), accessible from the outside of the dosing machine (1). In the embodiment shown, the user interface (14) is on the housing (4) and comprises a pushbutton (15), a display (16) and some additional buttons (17).

The dosing procedure for liquid substances and powdery substances, performed by the dosing machine (1) according to the invention, which comprises a first container (2) for liquid substances, a second container (3) for powdery substances and a user interface (14), and which allows the dosing or delivery of liquid substances or powdery substance into a recipient, includes the following basic steps:
- Storing data for a default dose of liquid substances and powdery substances included in the default dose. This default dose can be displayed on the display (16) of the user interface (14) and even reset by the pushbutton (15) and/or the additional buttons (17).
- Delivering liquid substances and powdery substances to the receptacle in an amount proportional to this default dose.

In one embodiment, the dosing and delivery based on stored default dose data is performed by the following steps: the user enters a number of doses by operating on the user interface (14) a discrete number of times (for example, by pressing the pushbutton (15) a certain number of times in a row); the dosing machine (1) delivers an amount of liquid substances and powdery substances to the receptacle, equal to the product of the default dose of liquid substances and powdery substances and the number of doses entered by the user. This means that if, for example, the dosing machine (1) has a stored default dose data of 100 g of powdery substances and 30 g of liquid substances, and the user presses on the pushbutton (15) three times, the dosing machine (1) delivers a total of 300 g of powdery substances and 90 g of liquid substances into the receptacle.

In another embodiment, the dosing and delivery based on stored default dose data is performed by the following steps: the user operates on the user interface for a certain time, during which time the dosing machine (1) delivers powdery substances to the receptacle; after the operation on the user interface (14) stops, the dosing machine (1) calculates the dose of powdery substances delivered and automatically delivers the appropriate amount of liquid substances, in the same proportion to the dose of powdery substances delivered as the proportion given in the stored default dose data. This means that if, for example, the user presses on the pushbutton (15) for two seconds and in that time the dosing machine delivers 50 g of powdery substances, and the stored default dose data is the same as in the previous example, the dosing machine (1) will automatically deliver 15 g of liquid substances into the receptacle once that the user has stopped pressing on the pushbutton (15).

The dosing machine (1) according to the invention facilitates the change of materials because the containers (2, 3) for the different substances are detachable. To facilitate the changing of materials even further, the dosing machine (1) preferably also comprises means for storing two or more liquid and powdery substance default dose data. In this case, the user interface (14) of the dosing machine (1) also includes means for selecting which stored default dose data is active and means to indicate which stored default dose data is active.

Then, the operation of the dosing machine (1) is as detailed above, with the variation that the dosing machine (I) stores data of at least two default doses of liquid substances and powdery substances included in the default dose, and that the dosing machine (1) identifies which default dose data is active. Then, when the user gives the order, the dosing machine (1) delivers liquid substances and solid substances into the receptacle (18) in a proportional amount to this active stored default dose data.

In order to select the active default dose, the user can operate on the said means of the user interface (14) until the stored default dose data of the materials that are of particular interested is activated. This activation will be indicated by the means to indicate what stored default dose data is active (e.g. in the form of various LEDs accompanied by texts "Dose 1", "Dose 2", etc., of which the one corresponding to the active stored default dose data will light up).

The dosing machine (1) preferably comprises means for detecting the type of container (2, 3) connected to the machine. For example, these means may take the form of Hall effect sensors capable of detecting the presence or non-presence of a specific number of metal points on the containers (2, 3). Therefore, if for instance the dosing machine (1) comprises two Hall effect sensors for the first container (2) and two Hall effect sensors for the second container (3), the dosing machine (1) will be able to detect four different types of first containers (2) and four different types of second containers (3). Depending on the types of containers (2, 3) detected, the dosing machine will identify what default dose should be active and will use this active default dose to calculate the doses that should be delivered to the receptacle (18).

As regards the default dose data stored, the invention contemplates various embodiments, including for example the possibility that the machine stores the specified amounts for each substance (e.g. weight, volume, etc.). It is also feasible that the machine stores the ratio between the amounts of one substance and the other (for example, the relationship between the weight of one substance and the other, the relationship between the volume of one substance and the other, etc.).

## Claims

1. Dosing machine (1) to allow dosing of liquid substances and powdery substances contained respectively in a first container (2) and a second container (3) provided with respective loading areas (2a, 3a) for loading substances, **characterised in that** it comprises:
- a housing (4), in which there is a cavity (5) open to the outside and into which the containers (2, 3) are partially inserted, the containers (2, 3) being connected to the interior of the dosing machine (1) in a detachable manner, with the containers (2, 3) partially protruding outward from the housing (4), and with the loading areas (2a, 3a) of the containers (2, 3) remaining outside the housing.

2. Dosing machine (1) according to claim 1, **characterized in that** it comprises means for storing at least one default dose data of liquid substances and powdery substances.

3. Dosing machine (I) according to claim 2, **characterized in that** it comprises means for storing two or more default dose data of liquid substances and powdery substances.

4. Dosing machine (1) according to claim 1, **characterized in that** the housing (4) comprises a removable lid (4a).

5. Dosing machine (1) according to claim 4, **characterized in that** it comprises a pump (6) to operate on the liquid substances from the first container (2), and a motor (7) and a transmission system (8) to allow the operation of a spindle (9) and cogwheel (10) unit located inside the first container (2), which allows the powdery substances to be stirred in order to facilitate their exit from the first container (2), where the pump (6), the motor (7) and the transmission system (8) are located inside the housing (4) and are accessible from the outside when the lid is removed (4a).

6. Dosing machine (1) according to claim 1, **characterized in that** it comprises a user interface (14), accessible from the outside of the dosing machine (1).

7. Dosing machine (1) according to claim 6, **characterized in that** the user interface (14) comprises a pushbutton (15), a display (16) and additional buttons (17).

8. Dosing machine (1) according to claims 3 and 6, **characterized in that** the user interface (14) comprises means to indicate what default dose data is active in the dosing machine (1).

9. Dosing machine (1) according to claims 3 and 6, **characterized in that** the user interface (14) includes means to select what default dose data is active.

10. Dosing machine (I) according to claim 1, **characterized in that** it comprises means for detecting the type of container (2, 3) connected to the machine.

11. Dosing machine (1) according to claim 6, **characterized in that** the user interface (14) is located on the housing (4).

12. Dosing procedure for liquid substances and powdery substances, performed by a dosing machine (1), which comprises a first container (2) for liquid substances, a second container (3) for powdery substances and a user interface (14), and which allows the dosing or delivery of liquid substances or powdery substances into a recipient, **characterised in that** it includes the steps of:
- storing the data for a default dose of liquid substances and powdery substances;
- delivering liquid substances and powdery substances to the receptacle (18) in an amount proportional to this default dose.

13. Dosing procedure for liquid substances and powdery substances according to claim 12, **characterised in that** it includes the steps of:
- entering a number of doses by operating the user interface (14) a discrete number of times;
- delivering an amount of liquid substances and powdery substances into the receptacle (18) which is equal to the product of the stored default dose data of liquid substances and powdery substances and the number of doses entered.

14. Dosing procedure for liquid substances and powdery substances according to claim 12, **characterised in that** it includes the steps of:
- delivering powdery substances into the receptacle (18) while operation on a user interface (14) lasts;
- once operation of the user interface (14) stops, calculating the dose of powdery substances delivered and automatically delivering the corresponding amount of liquid substances, in the same proportion to the dose of powdery substances delivered as the proportion of liquid substances and powdery substances in the stored default dose data.

15. Dosing procedure for liquid substances and powdery substances according to claim 12, **characterised in that** it includes the steps of:
- storing the data for at least two default doses of liquid substances and powdery substances;
- identifying which of the stored default dose data is active;
- delivering liquid substances and powdery substances to the receptacle (18) in an amount proportional to the active default dose.

16. Dosing procedure for liquid substances and powdery substances according to claim 12, **characterised in that** the data for a default dose of liquid substances and powdery substances included in the default dose include the amounts of each substance.

17. Dosing procedure for liquid substances and powdery substances according to claim 12, **characterised in that** the data for a default dose of liquid substances and powdery substances included in the default dose include the proportion or ratio between one substance and the other.

18. Dosing procedure for liquid substances and powdery substances according to claim 12, **characterised in that** the user interface is a pushbutton (15) included on the dosing machine (1), and operation of the user interface (14) is performed by pressing the pushbutton.
